# FASCICULE DE BREVET EUROPEEN

(11) **EP 2 484 075 B1**
(45) Date de publication et mention de la délivrance du brevet: **03.06.2015**
(21) Numéro de dépôt: 10778679.0
(22) Date de dépôt: 28.09.2010
(51) Int. Cl.: H04L 27/26

(54) **Systèmes de transmission multiporteuse de données numériques et procédés de transmission utilisant de tels systèmes**
Systeme für die Mehrträger-Übertragung von digitalen Daten und Übertragungsverfahren mit derartigen Systemen
Systems for the multicarrier transmission of digital data and transmission methods using such systems

(30) Priorité: 02.10.2009 FR 0904712
(43) Date de publication de la demande: 08.08.2012
(73) Titulaire: Commissariat à l'Energie Atomique et aux Energies Alternatives, 75015 Paris (FR)
(72) Inventeur: BELLANGER, Maurice, F-75003 Paris (FR)
(74) Mandataire: Chauvin, Vincent
(86) Numéro de dépôt international: PCT/FR2010/000644
(87) Numéro de publication internationale: WO 2011/039431

(56) Documents cités:
- EHSAN AZARNASAB ET AL: "Filterbank Multicarrier and Multicarrier CDMA for Cognitive Radio Systems", COGNITIVE RADIO ORIENTED WIRELESS NETWORKS AND COMMUNICATIONS, 2007. CROWNCOM 2007. 2ND INTERNATIONAL CONFERENCE ON, IEEE, PISCATAWAY, NJ, USA, 1 août 2007 (2007-08-01), pages 472-481, XP031276094, ISBN: 978-1-4244-0814-6

## Description

### DOMAINE TECHNIQUE AUQUEL SE RAPPORTE L'INVENTION

L'invention concerne un système pour la transmission de données numériques sur un canal de communication en utilisant une modulation multiporteuse à base de bancs de filtres et, plus particulièrement, une technique de réalisation améliorée pour l'application à un tel système.

### ARRIÈRE-PLAN TECHNOLOGIQUE

Les systèmes de transmission de données numériques exploitent les modulations multiporteuses pour atteindre un haut niveau d'efficacité, robustesse et flexibilité opérationnelle.

Une approche efficace pour la mise en oeuvre du principe de modulation multiporteuse est basée sur les bancs de filtres et est appelée la technique FBMC (filter bank based multicarrier).

Le canal de transmission des données numériques est divisé en sous-canaux, et, dans chaque sous-canal, les données modulent une sous-porteuse.

Une réalisation classique des bancs de filtres consiste à combiner un bloc adapté à fournir à sa sortie la transformée de Fourier discrète dudit signal appliqué à son entrée, appelé bloc FFT, dont la taille, c'est à dire le nombre de sorties, est égale au nombre total de sous-canaux dans le système de modulation, et un réseau polyphasé (PPN-Polyphase Network)), qui est un ensemble de filtres numériques, dont le nombre est égal à la taille de la transformée de Fourier discrète, appelée FFT (Fast Fourier Transform) par référence aux algorithmes rapides de réalisation.

Cette technique principe, calcul et mode de réalisation, est décrite dans l'ouvrage de M. Bellanger, «Digital Processing of signals», Wiley, 2000, aux pages 304 à 306 et 309 à 333.

L'application à la transmission numérique est décrite dans l'article de P. Siohan et al. « Analysis and design of OFDM/OQAM systems based on filter bank theory », IEEE transactions on Signal Processing, vol.50, N°5, 2002.

En fait, la technique la plus utilisée dans les modulations multiporteuses est la technique OFDM (Orthogonal Frequency Division Multiplexing), également à base de FFT. Cette technique est décrite dans l'ouvrage de M. Bellanger, «Digital Processing of signais », publié par Wiley en 2000, aux pages 414 à 418.

Dans cette technique, la FFT est effectuée à la cadence des symboles de la modulation multiporteuse, un symbole étant constitué par l'ensemble des signaux de sortie émis simultanément par un bloc iFFT, adapté à émettre à ses sorties un signal correspond à la transformée de Fourier inverse du signal appliqué à ses entrées.

Le bloc FFT du récepteur traite donc de manière disjointe les ensembles de signaux émis par le bloc iFFT de l'émetteur. En présence d'un canal de transmission, un temps de garde est introduit entre les symboles à l'émission pour éviter l'interférence entre deux symboles et un égaliseur à coefficient unique compense les distorsions du canal au niveau des sous-porteuses, à la réception.

Le principe de l'OFDM est simple et bien admis, car la FFT fait partie des connaissances de base des ingénieurs du domaine des communications. De plus, la chaîne de transmission introduit le minimum de retard, ce qui est une caractéristique appréciée dans un certain nombre d'applications.

Par contre, le temps de garde réduit le débit des données transmises et les propriétés de filtrage de la FFT sont insuffsantes pour tirer pleinement profit des nouveaux concepts en radiocommunications, particulièrement la radio cognitive.

Au contraire, la technique FBMC, qui ne nécessite pas de temps de garde et offre une haute résolution spectrale ainsi que l'indépendance des sous-canaux, se prête bien à la radio cognitive.

A la réception des signaux qui portent les données, la distorsion du canal de transmission est compensée par un égaliseur dans le domaine temporel pour chaque sous-canal, comme l'expliquent T. Ihalainen et al. dans l'article « Channel equalization in filter bank based multicarrier modulation for wireless communications », Eurasip Journal on Advances in Signal Processing, vol. 2007, ID 49389.

Le document EHSAN AZARNASAB ET AL: "Filterbank Multicarrier and Multicarrier CDMA for Cognitive Radio Systems", 2ND INTERNATIONAL CONFERENCE ON COGNITIVE RADIO ORIENTED WIRELESS NETWORKS AND COMMUNICATIONS,, CROWNCOM 2007, IEEE, PISCATAWAY, NJ, USA, 1 août 2007 (2007-08-01), pages 472-481, XP031276094, ISBN: 978-1-4244-0814-6 divulgue un système OQAM/OFDM avec un émetteur et un récepteur. La transmission multiporteuse est basée sur un banc de filtres et comprend l'étalement/désétalement de spectre.

Quand on recherche une égalisation à haute performance, l'égaliseur dans chaque sous-canal possède plusieurs coefficients et mémoires associées et il introduit un retard supplémentaire dans la transmission, ce qui peut être un inconvénient pour certaines applications.

La technique FBMC est donc plus complexe à comprendre et à mettre en oeuvre que l'OFDM, et introduit un retard supplémentaire dans l'égalisation.

### OBJET DE L'INVENTION

C'est un objet de la présente invention de réaliser un système de transmission à haute performance, efficace et facile à mettre en oeuvre, en utilisant le principe de la modulation multiporteuse par bancs de filtres.

Cet objet ainsi que d'autres sont réalisés par le système de transmission selon l'invention, qui est un système de transmission multiporteuse d'un signal comportant des données numériques sur un nombre prédéterminé de sous-canaux, comprenant au moins un émetteur comportant un banc de filtres de synthèse déduit d'un filtre prototype par translation de fréquence, cet émetteur comportant un convertisseur série/parallèle qui forme des ensembles d'échantillons dudit signal à transmettre comportant un nombre d'échantillons égal au nombre de sous-canaux dudit système, et un bloc iFFT adapté à fournir à ses sorties la transformée de Fourier inverse dudit signal appliqué à ses entrées, dans lequel ledit émetteur comporte en outre un dispositif d'étalement en fréquence qui multiplie chaque échantillon de données de chaque ensemble d'échantillons de données issu du convertisseur série/parallèle par des coefficients en fréquence prédéterminés du filtre prototype du banc de filtres de synthèse et applique chaque signal résultant de la multiplication d'un échantillon de données et d'un desdits coefficients en fréquence à l'une des entrées du bloc iFFT, qui présente une taille, c'est-à-dire un nombre d'entrées égal au nombre dé sorties, strictement supérieur audit nombre prédéterminé de sous-canaux.

Un tel émetteur présente l'avantage de n'utiliser qu'un nombre réduit de coefficients et seulement un bloc iFFT pour le traitement du signal. Ce bloc iFFT comporte de manière remarquable une taille, c'est-à-dire un nombre d'entrées et de sorties strictement supérieur au nombre de sous-canaux, contrairement aux bloc iFFT utilisés classiquement. Les signaux émis aux sorties de ce bloc iFFT se recouvrent alors partiellement temporellement.

Selon d'autres caractéristiques avantageuses et non-limitatives du système de transmission selon l'invention :
- l'émetteur comporte en outre un dispositif de recouvrement et sommation, comprenant un convertisseur parallèle/série qui reçoit en entrée les signaux des sorties du bloc iFFT et fournit en sortie un signal de sortie correspondant à la succession temporelle des signaux des sorties successives de ce bloc iFFT, le dispositif de recouvrement et sommation ajoutant en outre une partie du signal de sortie du convertisseur parallèle/série à une partie d'un ou de plusieurs signaux de sortie précédents du bloc iFFT, pour fournir le signal émis par ledit émetteur ;
- ladite taille du bloc iFFT de l'émetteur est égale à la longueur du filtre prototype du banc de filtres de synthèse, cette longueur étant un multiple de facteur K entier du nombre total de sous-canaux M ;
- un nombre égal audit facteur K de signaux émis par un nombre égal audit facteur K de sorties voisines du bloc iFFT présentent un recouvrement temporel correspondant à M échantillons de données, et ledit dispositif de recouvrement et sommation somme les parties qui se recouvrent de chacun de ces K signaux émis par K sorties voisines du bloc iFFT pour fournir au moins une partie du signal émis par ledit émetteur.

L'invention concerne également un système de transmission multiporteuse de données numériques sur un nombre prédéterminé de sous-canaux, comprenant au moins un récepteur comportant un banc de filtres d'analyse déduit d'un filtre prototype par translation de fréquence, ce récepteur comportant un convertisseur série/parallèle, qui forme des ensembles d'échantillons du signal reçu comportant un nombre d'échantillons égal audit nombre prédéterminé de sous-canaux du système et un bloc FFT adapté à fournir à ses sorties la transformée de Fourier du signal appliqué à ses entrées, dans lequel ledit bloc FFT dudit récepteur présente une taille, c'est-à-dire un nombre d'entrées égal au nombre de ses sorties, strictement supérieur audit nombre prédéterminé de sous-canaux du système et en ce que ledit récepteur comporte en outre un dispositif de désétalement en fréquence, qui multiplie le signal de chaque sortie du bloc FFT par l'un des coefficients en fréquence prédéterminés du filtre prototype du banc de filtres d'analyse et somme le résultat de ces multiplications pour fournir au moins une partie du signal de sortie dudit récepteur.

La distorsion du canal de transmission est compensée par un égaliseur qui est introduit entre le bloc FFT et le dispositif de désétalement en fréquence, de sorte qu'aucun retard supplémentaire n'est nécessaire. De manière remarquable, grâce au recouvrement temporel des échantillons de données appliqués en entrée du bloc FFT, l'égaliseur peut opérer sans retard et sans traitement additionnel des signaux de sortie du bloc FFT. Le traitement des signaux est ainsi plus simple et plus rapide.

Ce recouvrement temporel correspond à la répétition, dans plusieurs ensembles d'échantillons de données successifs en entrée du bloc FFT, d'un nombre prédéterminé de données numériques.

Selon d'autres caractéristiques avantageuses et non-limitatives du système de transmission selon l'invention :
- ledit récepteur comporte également un dispositif de synchronisation imposant au bloc FFT une cadence de calcul strictement supérieure à la cadence égale à l'inverse de la taille dudit bloc FFT ;
- la taille du bloc FFT du récepteur est égale à la longueur du filtre prototype du banc de filtres, cette longueur étant un multiple de facteur K entier du nombre total de sous-canaux M, et dans lequel deux signaux d'entrées consécutifs du bloc FFT présentent un recouvrement temporel d'un nombre d'échantillons de signal reçu égal à la taille du bloc FFT de laquelle est soustraite le nombre total de sous-canaux M ;
- le récepteur comporte un égaliseur introduit entre le bloc FFT et le dispositif de désétalement en fréquence qui multiplie le signal de chaque sortie du bloc FFT par un coefficient prédéterminé de l'égaliseur.

L'invention concerne également un procédé de transmission multiporteuse d'un signal utilisant le système de transmission multiporteuse tel que décrit précédemment selon lequel on module les signaux des sous-canaux par une modulation OQAM. L'invention concerne également un système de transmission multiporteuse de données numériques, à base de bancs de filtres, comportant un émetteur et un récepteur tels que décrits précédemment.

L'invention concerne enfin un procédé de transmission multiporteuse de données numériques utilisant ce système de transmission, comportant un émetteur et un récepteur tels que décrits précédemment, selon lequel on module les signaux des sous-canaux par une modulation OQAM.

### DESCRIPTION DÉTAILLÉE D'UN EXEMPLE DE RÉALISATION

La description suivante, faite en regard des dessins ci-annexés, le tout donné à titre d'exemple non limitatif, fera bien comprendre comment l'invention peut être réalisée.

Sur les dessins annexés :
- la figure 1 est un schéma-bloc de l'émetteur d'un système de transmission multiporteuse à base de bancs de filtres conforme à l'invention ;
- la figure 2 montre un exemple de réponse en fréquence du filtre prototype d'un banc de filtres ;
- la figure 3 est un schéma-bloc des dispositifs d'étalement en fréquence et de recouvrement et sommation de l'émetteur, ;
- la figure 4 représente schématiquement les signaux de sortie du convertisseur parallèle/série du dispositif de recouvrement et sommation et illustre l'opération de recouvrement et sommation ;
- la figure 5 est un schéma-bloc du récepteur d'un système de transmission multiporteuse à base de bancs de filtres conforme à l'invention ; et,
- la figure 6 représente schématiquement l'égaliseur et le dispositif de désétalement en fréquence du récepteur de la figure 5 pour un sous-canal d'indice i donné.

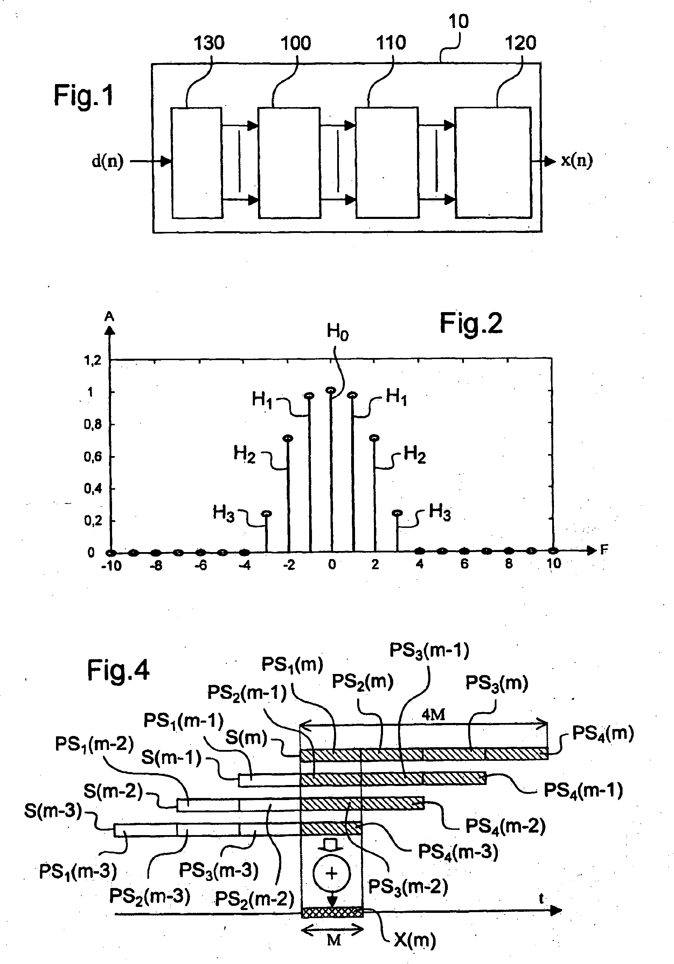

On a représenté sur la figure 1 un émetteur 10 d'un système de transmission selon l'invention.

Cet émetteur 10 comporte un convertisseur série/parallèle 130, un dispositif d'étalement en fréquence 100, un bloc iFFT 110 adapté à fournir à ses sorties la transformée de Fourier inverse du signal appliqué à ses entrées et un dispositif de recouvrement et sommation 120 comprenant un convertisseur parallèle/série 121, ainsi qu'un ensemble de mémoires 122, 123, 124 et d'additionneurs 125, 126, 127.

Le dispositif d'étalement en fréquence 100, le bloc iFFT 110 et le dispositif de recouvrement et sommation 120 forment un banc de filtres de synthèse.

Ce banc de filtres de synthèse se déduit d'un filtre prototype passe-bas par translation en fréquence.

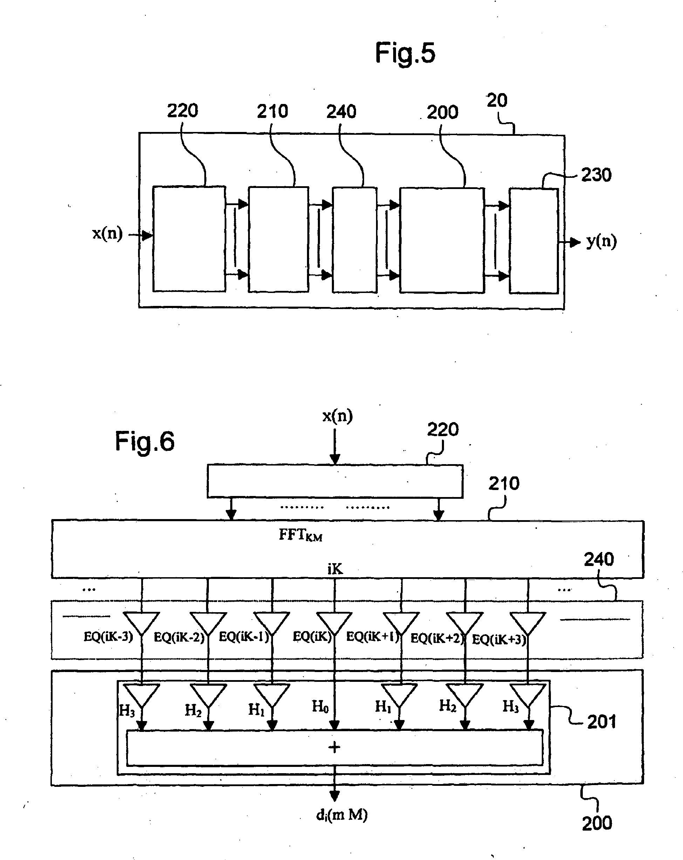

Les données numériques d'entrée d(n) sont appliquées en entrée du convertisseur série/parallèle 130 couplé au dispositif d'étalement en fréquence 100. L'indice n correspond à un compteur de temps. Il est affecté aux signaux d'entrée et de sortie de l'émetteur 10 et du récepteur 20 (figure 5) du système de transmission et indique que le signal considéré comporte des données reçues ou émises à une cadence prise comme unité, qui correspond à la cadence la plus élevée utilisée dans le système de transmission.

Le convertisseur série/parallèle 130 met sous forme parallèle d'ensemble d'échantillons de données de taille prédéterminée les données numériques d'entrées d(n) qui se présentent à son entrée sous la forme série. Ces ensembles d'échantillons de données sont repérés par un indice m, qui correspond à un compteur des ensembles d'échantillons obtenus par conversion série/parallèle d'un signal.

Le dispositif d'étalement de fréquence 100 applique chaque échantillon de données issu du convertisseur 130, après pondération par un coefficient, à plusieurs entrées du bloc iFFT 110. Chaque échantillon de données est ainsi étalé sur plusieurs entrées de ce bloc iFFT 110 et cette opération correspond à la mise en oeuvre dans le domaine des fréquences du banc de filtres de synthèse.

Afin d'illustrer le processus, on considère un filtre prototype comportant un nombre L=K*M de coefficients dans le domaine temporel. Ce nombre de coefficients dans le domaine temporel est appelé la longueur du filtre prototype.

Le nombre total de fréquences porteuses, ou de sous-canaux, dans le système de transmission est noté M. Le facteur K est un nombre entier appelé le facteur K de recouvrement. Le convertisseur série/parallèle 130 forme des ensembles comportant un nombre d'échantillons égal à ce nombre M de sous-canaux.

La sortie du bloc iFFT 110 est un ensemble de K*M échantillons, c'est-à-dire comportant un nombre d'échantillons égal au produit du facteur K de recouvrement et du nombre de sous-canaux M, appelé le signal de sortie du bloc iFFT 110. Le facteur K est égal au nombre de signaux de sortie du bloc iFFT qui présentent un recouvrement dans le domaine temporel, c'est-à-dire qui correspondent à des ensembles d'échantillons de données d'entrée comportant au moins une partie commune.

A titre d'exemple, une réponse en fréquence d'un filtre prototype pour un facteur K de recouvrement égal à 4 est montrée à la figure 2. Cette réponse en fréquence se compose d'un nombre 2*K-1, égal à deux fois ledit facteur K de recouvrement moins un, de valeurs non nulles notés Hₖ qui sont les coefficients du filtre prototype dans le domaine des fréquences.

Ici, ces coefficients en fréquence sont donc au nombre de sept. La figure 2 montre l'amplitude de chaque coefficient en fréquence en fonction de la fréquence, dont l'unité est ici 1/(K*T), T représentant la durée d'un ensemble de M échantillons émis par l'émetteur. Le filtrage d'un échantillon de données est réalisé par une multiplication par les coefficients en fréquence non nuls du filtre prototype, suivie d'une transformée de Fourier discrète inverse.

Une description détaillée de la méthode pour déterminer les coefficients en fréquence d'un filtre prototype est données dans l'ouvrage précité de M. Bellanger, pages 325 à 329.

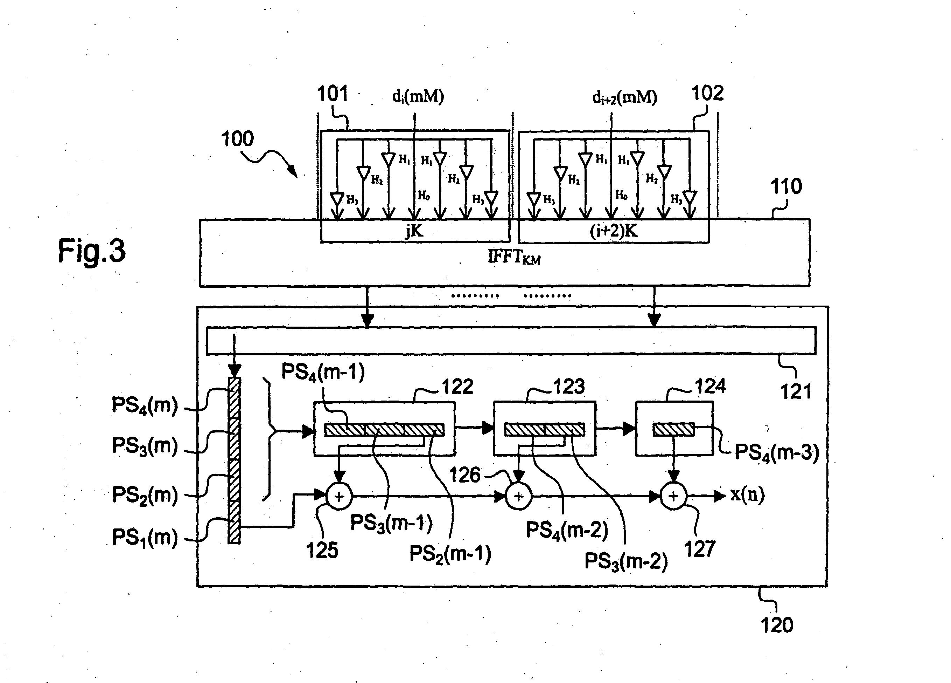

Ce processus est illustré à la figure 3.

Chaque échantillon de données d'entrée issu du convertisseur série/parallèle 130 est noté dᵢ(mM). L'indice m correspondant au compteur des ensembles d'échantillons obtenus par conversion série/parallèle du signal d'entrée d(n). Ce compteur est aussi associé à la cadence de calcul du bloc iFFT 110 de l'émetteur 10, donc à la cadence des signaux d'entrée et de sortie du bloc iFFT 110, qui est égale à 1/M. L'indice i indique l'indice du sous-canal du système de transmission selon l'invention auquel est destiné cet échantillon de données.

Les indices n et m vérifient la relation suivante : n = m*M+p où p a une valeur comprise entre 0 et M-1.

Chaque échantillon de données dᵢ(mm) est appliqué en entrée d'un élément de calcul 101 du dispositif d'étalement en fréquence 100 qui effectue les multiplications par les 2*K-1 coefficients en fréquence Hₖ. Les 2*K-1 sorties de cet élément de calcul 101 sont appliquées aux entrées correspondantes du bloc iFFT 110, ayant ici pour indices i*K-3, ....., i*K+3.

De même, l'échantillon de données dᵢ₊₂(mM) est appliqué à un autre élément de calcul 102 du dispositif d'étalement en fréquence 100, qui effectue les multiplications par les 2*K-1 coefficients Hₖ pour les données destinées au sous-canal d'indice i+2. Le nombre de tels éléments de calcul est égal au nombre de sous-canaux utilisés dans le système de transmission considéré et il est inférieur ou égal au nombre total de sous-canaux M.

Il est clair que les sous-canaux d'indices i et i+2 n'ont pas de recouvrement en fréquence, alors que le sous-canal d'indice i+1 possède un recouvrement avec ces deux sous-canaux. Dans ces conditions, l'interférence est évitée en prenant dᵢ(mm) et dᵢ₊₂(mM) réels et dᵢ₊₁(mM) imaginaire, ou inversement. Les signaux d'indices impairs dᵢ₊₁(mM) qui sont en quadrature avec les signaux d'indices pairs dᵢ(mm) et dᵢ₊₂(mM) réels ne sont pas représentés sur la figure 3.

Ainsi, ici, à chaque indice i pair sont associées 2*K-1 entrées du bloc iFFT 110 et, à chaque indice i impair sont associées 2*K-1 entrées du bloc iFFT 110 en quadrature avec les entrées associées aux indices pairs.

La taille du bloc iFFT 110, c'est-à-dire le nombre de ses entrées et de ses sorties, est égale à la longueur du filtre prototype du banc de filtre de synthèse, c'est-à-dire égale à K*M. De manière remarquable, les calculs sont effectués à la cadence 1/M et non à une cadence égale à l'inverse de la taille du bloc iFFT 110, comme cela est le cas habituellement. Alors, dans le domaine temporel, un nombre égal au facteur K de signaux de sortie successifs du bloc iFFT 110 présentent un recouvrement temporel, comme le montre la figure 4.

Les cadences de calcul des éléments de calculs 101, 102 du dispositif d'étalement de fréquence 100 et du bloc iFFT 110 sont synchronisées par un dispositif de synchronisation non représenté.

Chaque ensemble de M échantillons de données transmis est obtenu par sommation d'une partie de plusieurs signaux de sortie du bloc iFFT, comme représenté schématiquement sur la figure 4.

Ici, une partie de chacun d'un nombre égal au facteur K des signaux de sortie successifs est sommée. Pour cela, une partie de chacun des K-1 premiers signaux de sortie successifs du bloc iFFT 110 issus du convertisseur parallèle/série 121 du dispositif de recouvrement et sommation 120 est stockée dans l'une des K-1 mémoires 122, 123, 124 du dispositif de recouvrement et sommation 120 représenté sur la figure 3.

Ces K-1 mémoires sont disposées en série ; l'entrée de la première mémoire reçoit le signal issu du convertisseur parallèle/série, la deuxième mémoire reçoit en entrée la sortie de la première mémoire, etc. Chaque mémoire comporte une sortie reliée à une entrée de l'un des K-1 additionneurs 125, 126, 127. Un premier additionneur 125 des K-1 additionneurs reçoit par ailleurs en entrée le signal de sortie du bloc iFFT et les additionneurs 126, 127 suivants reçoivent également en entrée le signal de sortie de l'additionneur précédent.

Les K-1 additionneurs 125, 126, 127 du dispositif de recouvrement et sommation 120, représentés sur cette même figure 3, réalisent l'addition d'une partie du Kième signal de sortie du bloc iFFT 110 avec les K-1 parties des K-1 signaux de sortie précédents du bloc iFFT 110 mémorisés dans les mémoires 122, 123, 124 et fournissent les échantillons de données pour la transmission.

Une partie de chacun des K-1 premiers signaux de sortie est mise en mémoire dans les K-1 mémoires 122, 123, 124, qui sont au nombre de trois dans l'exemple décrit ici.

Alternativement, seules les parties d'un nombre inférieur à K-1 des signaux de sortie successifs du bloc iFFT 110 sont stockées et additionnées pour obtenir le signal de données pour la transmission. Il est alors prévu un nombre correspondant de mémoires et d'additionneurs.

La figure 4 montre K signaux de sortie S(m), S(m-1), S(m-2), S(m-3) successifs du bloc iFFT 110, associés aux indices m, m-1, m-2 et m-3, avant conversion parallèle/série du signal. Chacun de ces signaux S(m), S(m-1), S(m-2), S(m-3) comporte K parties PSu(m), avec u variant entre 1 et K, comprenant chacune M échantillons.

Ici, on a donc représenté quatre signaux de sortie S(m), S(m-1), S(m-2), S(m-3) successifs comportant chacun quatre parties PS₁(m), PS₂(m), PS₃(m) PS₄(m), PS₁(m-1), PS₂(m-1), PS₃(m-1), PS₄(m-1), PS₁(m-2), PS₂(m-2), PS₃(m-2) PS₄(m-2), PS₁(m-3), PS₂(m-3), PS₃(m-3), PS₄(m-3).

Comme la cadence de production de ces signaux de sortie S(m), S(m-1, S(m-2), S(m-3) est égale à 1/M, ces signaux S(m), S(m-1), S(m-2), S(m-3) présentent des recouvrements dans le temps.

Deux signaux de sortie consécutifs du bloc iFFT 110, tels que les signaux de sortie d'indices m et m-1 S(m), S(m-1) présentent un recouvrement temporel correspondant à trois parties de M échantillons chacune. Ici, comme représenté sur la figure 4 par les hachures, les trois premières parties notées PS₁(m), PS₂(m) PS₃(m) du signal de sortie d'indice m S(m) présentent un recouvrement temporel avec les trois dernières parties PS₂(m-1), PS₃(m-1), PS₄(m-1), du signal de sortie d'indice m-1 S(m-1).

Le signal d'indice m et le signal d'indice m-2 présentent un recouvrement temporel de deux parties de M échantillons chacune. Ici les deux premières parties notées PS₁(m), PS₂(m) du signal de sortie d'indice m S(m) présentent un recouvrement temporel avec les deux dernières parties PS₃(m-2), PS₄(m-2) du signal de sortie d'indice m-2 S(m-2).

Le signal d'indice m et le signal d'indice m-3 présentent un recouvrement temporel d'une partie comportant M échantillons. Ici la première partie notée PS₁(m) du signal de sortie d'indice m S(m) présente un recouvrement temporel avec la dernière partie notée PS₄(m-3) du signal de sortie d'indice m-3 S(m-3).

Alors, l'ensemble de M échantillons qui constitue la sortie X(m) de l'émetteur 10 correspondant à l'indice m est obtenu par la sommation des parties se recouvrant des quatre signaux de sortie successifs d'indice m à m-3 du bloc iFFT 110, à savoir la première partie PS₁(m) du signal de sortie S(m) du bloc iFFT 110 à l'indice m, la deuxième partie PS₂(m-1) du signal de sortie S(m-1) du bloc iFFT 110 à l'indice m-1, la troisième partie PS₃(m-2) du signal de sortie S(m-2) du bloc iFFT 110 à l'indice m-2, et la quatrième partie PS₄(m-3) du signal de sortie S(m-3) du bloc iFFT 110 à l'indice m-3.

Le signal de sortie X(m+1) de l'émetteur 10 à l'indice temporel suivant m+1 est obtenu par la sommation de la première partie du signal de sortie du bloc iFFT 110 à l'indice m+1, la deuxième partie du signal de sortie du bloc iFFT 110 à l'indice m, etc.

En pratique, au temps m-3, le signal de sortie S(m-3) du bloc iFFT 110 d'indice m-3 est appliqué en entrée de la première mémoire 122 des trois mémoires 122, 123, 124 du dispositif de recouvrement et sommation 120.

Cette première mémoire 122 garde en mémoire au moins les trois dernières parties, ici par exemple PS₂(m-3), PS₃(m-3), PS₄(m-3) du signal de sortie du bloc iFFT 110 appliqué à son entrée.

Au temps m-2, le signal de sortie S(m-2) du bloc iFFT 110 d'indice m-2 est appliqué en entrée de la première mémoire 122 et la deuxième mémoire 123 charge au moins une partie du contenu de la première mémoire 122.

Cette deuxième mémoire 123 garde en mémoire au moins les deux dernières parties du signal de sortie de la première mémoire 122 appliqué à son entrée, ici par exemple PS₃(m-3), PS₄(m-3).

Au temps m-1, le signal de sortie S(m-1) du bloc iFFT 110 d'indice m-1 est appliqué en entrée de la première mémoire 122, la deuxième mémoire 123 charge au moins une partie du contenu de la première mémoire 122, et la troisième mémoire 124 charge au moins une partie du contenu de la deuxième mémoire 123.

Cette troisième mémoire 124 garde en mémoire au moins la dernière partie du signal de sortie de la deuxième mémoire 123 appliqué à son entrée, ici par exemple PS₄(m-3).

Ainsi, sur la figure 3, la première mémoire 122 contient 3*M échantillons, la deuxième mémoire 123 contient 2*M échantillons et la troisième mémoire 124 contient M échantillons.

Au temps m, le signal de sortie S(m) du bloc iFFT 110 d'indice m est appliqué en entrée de la première mémoire 122. Comme à chaque incrémentation du compteur correspondant à l'indice m, le signal de sortie S(m) est également appliqué à l'entrée du premier additionneur 125 qui somme la première partie PS₁(m) de ce signal S(m) et la première partie du signal contenu dans la première mémoire 122. Le deuxième additionneur 126 somme le résultat de cette addition et la première partie du signal contenu dans la deuxième mémoire 123, et le troisième additionneur 127 somme le résultat de cette addition et la première partie du signal contenu dans la troisième mémoire 124. Finalement, la première partie PS₁(m) du signal S(m), la deuxième partie PS₂(m-1) du signal S(m-1) issu du convertisseur parallèle série au temps m-1, la troisième partie PS₃(m-2) du signal S(m-2) issu du convertisseur parallèle série au temps m-2 et la quatrième partie PS₄(m-3) du signal S(m-3) issu du convertisseur parallèle série au temps m-3 sont sommées.

La somme de ces quatre parties est le signal émis X(m) par l'émetteur au temps correspondant à l'indice m.

Alternativement, les mémoires du dispositif de recouvrement et sommation peuvent garder en mémoire la totalité de chaque signal S(m-3), S(m-2 et S(m-1) appliqué à leur entrée.

Le schéma-bloc du récepteur 20 est donné à la figure 5.

Il comporte un convertisseur série/parallèle 220, un bloc FFT 210 adapté à fournir à ses sorties la transformée de Fourier discrète du signal appliqué à ses entrées, un égaliseur 240, un dispositif de désétalement de fréquence 200 et un convertisseur parallèle/série 230.

Le bloc FFT 210, l'égaliseur 240 et le dispositif de désétalement de fréquence 200 forment un banc de filtres d'analyse obtenu par translation de fréquence du même filtre prototype que celui du banc de filtres de synthèse de l'émetteur.

Le signal x(n) reçu est ici supposé identique au signal émis par l'émetteur 10. Ceci correspondrait à une situation dans laquelle le canal de transmission est absent. Ce signal reçu peut alternativement être différent du signal émis par l'émetteur 10, sans que cela ne modifie la suite de la description.

Le signal x(n) reçu sous la forme série est appliqué à un convertisseur série/parallèle 220 qui forme des ensembles de K*M échantillons de données sous la forme parallèle comprenant un nombre d'échantillons de données numériques égal au facteur K de recouvrement multiplié par le nombre M total de sous-canaux du système de transmission. Ces ensembles de K*M échantillons sont appliqués aux entrées du bloc FFT 210.

De manière similaire à ce qui a été décrit pour l'émetteur 10 précédemment, l'indice n correspond à un compteur de temps utilisé pour les signaux d'entrée et de sortie du récepteur 20 et l'indice m est associé à un compteur d'ensembles d'échantillons formé par le convertisseur série/parallèle 220, ainsi qu'à la cadence de calcul du bloc FFT 210 du récepteur 20, donc à la cadence des signaux d'entrée et de sortie du bloc FFT 210, qui est égale à 1/M comme pour l'émetteur 10. L'indice i indique l'indice du sous-canal du système de transmission selon l'invention dont provient l'échantillon de données.

Le bloc FFT 210 présente la même taille que le bloc iFFT 110, c'est-à-dire qu'il comporte un nombre K*M d'entrées et un nombre K*M de sorties qui sont égaux au facteur K de recouvrement multiplié par le nombre de sous-canaux M du système de transmission.

Les calculs du bloc FFT 210 sont également synchronisés par un dispositif de synchronisation non représenté, et sont réalisés à la même cadence que les calculs du bloc iFFT 110 de l'émetteur 10, c'est-à-dire à une cadence égale à l'inverse du nombre de sous-canaux du système 1/M.

Chaque ensemble de K*M échantillons correspond à la fenêtre temporelle de la transformée de Fourier réalisée par le bloc FFT 210 et, comme la transformée de Fourier est exécutée à la cadence égale à 1/M, cette fenêtre glisse de M échantillons au même rythme.

Le bloc FFT 210 est couplé à l'égaliseur 240, qui est suivi par le dispositif de désétalement en fréquence 200, puis par le convertisseur parallèle/série 230 qui fournit le flux des données numériques de sortie du récepteur 20.

Une partie de l'égaliseur 240 correspondant à un sous-canal particulier, d'indice i, est représentée sur la figure 6. Le signal porté par chaque sous-canal est présent sur un nombre 2K-1 égal à deux fois le facteur K moins un de sorties du bloc FFT (210).

Le système de transmission comprend des moyens pour mesurer ou estimer la réponse du canal aux fréquences correspondantes et des coefficients de l'égaliseur notés EQ(iK-3), ......, EQ(iK+3) sont obtenus à partir des résultats de ces mesures ou estimations. Une description des techniques employées pour la mesure ou l'estimation du canal et le calcul des coefficients pour l'égalisation est donnée dans l'article de T. Ihalainen cité précédemment ainsi que dans l'article de M. Morelli et al. "Synchronization techniques for orthogonal frequency division multiple access : a tutorial review", Proceedings of the IEEE, vol.95, n°7, juillet 2007, et dans l'article de S. Celeri et al. "A study of channel estimation in OFDM systems", IEEE Trans. on Broadcasting, vol.48, n°3, septembre 2002.

Comme représenté sur la figure 6, les 2K-1 signaux des sorties du bloc FFT 210 associés au sous-canal d'indice i dans le système sont multipliés par les coefficients correspondants EQ(iK-3), ....., EQ(iK+3) associés à chaque sortie du bloc FFT 210 dans l'égaliseur 240. Ensuite, les 2K-1 signaux des sorties correspondantes de l'égaliseur sont appliquées à un élément de calcul 201 du dispositif de désétalement en fréquence 200 associé au sous-canal d'indice i. Cet élément de calcul 201 effectue les multiplications des signaux de sorties de l'égaliseur par lesdits coefficients en fréquence du filtre prototype.

Après multiplication par les coefficients en fréquence du filtre prototype, H₀, H₁, H₂ et H₃, comme indiqué sur la figure 6, les 2K-1 signaux correspondant obtenus sont additionnés par l'élément de calcul 201 pour fournir le signal de sortie dᵢ(mM) à partir duquel la séquence de données est restituée. Au temps n, la séquence de données y(n) de sortie du récepteur 20 est restituée à partir des signaux de sortie dᵢ(mM) de tous les sous-canaux d'indice i.

L'invention concerne également un procédé de transmission de données émises et/ou reçu par un émetteur et/ou un récepteur tel que décrit précédemment, selon lequel on module chaque sous-canal par une modulation de type OQAM (Offset Quadrature Amplitude Modulation). Le principe de cette modulation et son mode de réalisation sont exposés dans l'article de P. Siohan et al. cité précédemment, ainsi que dans l'article de B. Hirosaki « An orthogonally multiplexed QAM system using the discrète Fourier transform », IEEE, Trans.on Communications, vol.29, N°7, juillet 1981.

Selon le procédé conforme à l'invention, la cadence de calcul imposée à l'émetteur et/ou au récepteur selon l'invention est égale à 2/M, au lieu de la cadence 1/M considérée ci-dessus, mais en appliquant les données à transmettre alternativement sur les entrées réelles et imaginaires de chaque sous-canal.

La mise en oeuvre du système de transmission selon l'invention n'est pas modifiée. L'émission et la réception d'un signal sont réalisées en répétant les opérations expliquées ci-dessus en référence à la figure 1 à l'émission et les opérations expliquées en référence à la figure 5 à la réception à la cadence 2/M.

Diverses modifications de la présente invention peuvent apparaître à l'homme de l'art au vu de la présente description et des schémas qui l'accompagnent.

On peut en particulier envisager que le système de transmission selon l'invention ne comporte qu'un émetteur ou qu'un récepteur tel que décrit précédemment, utilisé avec respectivement un récepteur ou un émetteur connu de l'homme du métier.

## Revendications

1. Système de transmission multiporteuse d'un signal comportant des données numériques sur un nombre prédéterminé de sous-canaux, comprenant au moins un émetteur (10) comportant un banc de filtres de synthèse déduit d'un filtre prototype par translation de fréquence, cet émetteur comportant un convertisseur série/parallèle (130) qui forme des ensembles d'échantillons du signal à transmettre comportant un nombre d'échantillons égal au nombre de sous-canaux dudit système, et un bloc iFFT (110) adapté à fournir à ses sorties la transformée de Fourier inverse dudit signal appliqué à ses entrées,
dans lequel ledit émetteur comporte en outre un dispositif d'étalement en fréquence (100) qui multiplie chaque échantillon de données de chaque ensemble d'échantillons de données issu du convertisseur série/parallèle (130) par des coefficients en fréquence (Hₖ) prédéterminés du filtre prototype du banc de filtres de synthèse et applique chaque signal résultant de la multiplication d'un échantillon de données et d'un desdits coefficients en fréquence (Hₖ) à l'une des entrées du bloc iFFT (110), qui présente une taille, c'est-à-dire un nombre d'entrées égal au nombre de sorties, strictement supérieure audit nombre prédéterminé de sous-canaux.

2. Système de transmission selon la revendication 1, dans lequel l'émetteur comporte en outre un dispositif de recouvrement et sommation (120), comprenant un convertisseur parallèle/série (121) qui reçoit en entrée les signaux des sorties du bloc iFFT (110) et fournit en sortie un signal de sortie correspondant à la succession temporelle des signaux des sorties successives de ce bloc iFFT (110), le dispositif de recouvrement et sommation ajoutant en outre une partie du signal de sortie du convertisseur parallèle/série (121) à une partie d'un ou de plusieurs signaux de sortie précédents du bloc iFFT, pour fournir le signal émis par ledit émetteur (10).

3. Système de transmission multiporteuse selon l'une des revendications 1 et 2, dans lequel ladite taille du bloc iFFT (110) de l'émetteur (10) est égale à la longueur du filtre prototype du banc de filtres de synthèse, cette longueur étant un multiple de facteur K entier du nombre total de sous-canaux M.

4. Système de transmission multiporteuse selon l'une des revendications 1 à 3, dans lequel un nombre égal audit facteur K de signaux émis par un nombre égal audit facteur K de sorties voisines du bloc iFFT (110) présentent un recouvrement temporel correspondant à M échantillons de données, et ledit dispositif de recouvrement et sommation (120) somme les parties qui se recouvrent de chacun de ces K signaux émis par K sorties voisines du bloc iFFT (110) pour fournir au moins une partie du signal émis par ledit émetteur (10).

5. Système de transmission multiporteuse de données numériques sur un nombre prédéterminé de sous-canaux, comprenant au moins un récepteur (20) comportant un banc de filtres d'analyse déduit d'un filtre prototype par translation de fréquence, ce récepteur (20) comportant un convertisseur série/parallèle (220) qui forme des ensembles d'échantillons du signal reçu comportant un nombre d'échantillons égal audit nombre prédéterminé de sous-canaux du système et un bloc FFT (210) adapté à fournir à ses sorties la transformée de Fourier du signal appliqué à ses entrées,
dans lequel ledit bloc FFT (210) dudit récepteur (20) présente une taille, c'est-à-dire un nombre d'entrées égal au nombre de ses sorties, strictement supérieure audit nombre prédéterminé de sous-canaux du système, et dans lequel ledit récepteur (20) comporte en outre un dispositif de désétalement en fréquence (200), qui multiplie le signal de chaque sortie du bloc FFT (210) par l'un des coefficients en fréquence (Hₖ) prédéterminés du filtre prototype du banc de filtres d'analyse et somme le résultat de ces multiplications pour fournir au moins une partie du signal de sortie dudit récepteur (20).

6. Système de transmission selon la revendication 5, dans lequel ledit récepteur comporte également un dispositif de synchronisation imposant au bloc FFT (210) une cadence de calcul strictement supérieure à la cadence égale à l'inverse de la taille dudit bloc FFT (210).

7. Système de transmission multiporteuse selon l'une des revendications 5 et 6, dans lequel la taille du bloc FFT (210) du récepteur (20) est égale à la longueur du filtre prototype du banc de filtres, cette longueur étant un multiple de facteur K entier du nombre total de sous-canaux M, et dans lequel deux signaux d'entrées consécutifs du bloc FFT (210) présentent un recouvrement temporel d'un nombre d'échantillons de signal reçu égal à la taille du bloc FFT (210) de laquelle est soustraite le nombre total de sous-canaux M.

8. Système de transmission multiporteuse selon l'une des revendications 5 à 7, dans lequel le récepteur (20) comporte un égaliseur (240) introduit entre le bloc FFT (210) et le dispositif de désétalement en fréquence (200), qui multiplie le signal de chaque sortie du bloc FFT (210) par un coefficient prédéterminé de l'égaliseur.

9. Procédé de transmission multiporteuse d'un signal utilisant le système de transmission multiporteuse selon l'une des revendication 1 à 8 selon lequel on module les signaux des sous-canaux par une modulation OQAM.

10. Système de transmission multiporteuse de données numériques; à base de bancs de filtres, comportant un émetteur selon l'une des revendication 1, à 4 et un récepteur selon l'une des revendications 5 à 8.

11. Procédé de transmission multiporteuse d'un signal utilisant un système de transmission multiporteuse selon la revendication 10, selon lequel on module les signaux des sous-canaux par une modulation OQAM.

## Patentansprüche

1. Mehrträger-Übertragungssystem eines Signals, mit Digitaldaten auf einer vorbestimmten Anzahl von Unterkanälen, das mindestens einen Sender (10) mit einer durch Frequenzverschiebung von einem Prototypfilter abgeleiteten Synthese-Filterbank umfasst, wobei dieser Sender einen Serien-Parallel-Wandler (130) umfasst, der Mustereinheiten des zu übertragenden Signals bildet, mit einer Anzahl von Mustern, die der Anzahl der Unterkanäle des Systems entspricht, sowie einen iFFT-Block (110), der an seine Ausgänge die inverse Fouriertransformierte des an seinen Eingängen vorhandenen Signals liefern kann,
in dem der Sender zudem eine Frequenzstreuungsvorrichtung (100) umfasst, die jedes Datenmuster jeder Datenmustereinheit aus dem Serien-Parallel-Wandler (130) mit vorbestimmten Frequenzkoeffizienten des Prototypfilters der Synthese-Filterbank multipliziert und jedes Signal, das aus der Multiplikation eines Datenmusters und eines der Frequenzkoeffizienten (Hₖ) resultiert, an einem der Eingänge des iFFT-Blocks (110) anwendet, der eine Größe aufweist, d. h. eine genauso große Anzahl von Eingängen und Ausgängen, die unbedingt größer ist als die vorbestimmte Anzahl von Unterkanälen.

2. Übertragungssystem nach Anspruch 1, in dem der Sender zudem eine Überlappungs- und Summiervorrichtung (120) aufweist, mit einem Serien-Parallel-Wandler (121), welcher am Eingang die Ausgangssignale des iFFT-Blocks (110) empfängt und am Ausgang ein der zeitlichen Folge der Signale der nacheinanderfolgenden Ausgänge dieses iFFT-Blocks (110) entsprechendes Ausgangssignal liefert, wobei die Überlappungs- und Summiervorrichtung außerdem einen Teil des Ausgangssignals des Serien-Parallel-Wandlers (121) zu einem Teil eines oder mehrerer vorausgehender Ausgangssignale des iFFT-Blocks hinzufügt, um das von diesem Sender (10) abgegebene Signal zu liefern.

3. Mehrträger-Übertragungssystem nach einem der Ansprüche 1 und 2, in dem die Größe des iFFT-Blocks (110) des Senders (10) der Länge des Prototypfilters der Synthese-Filterbank entspricht, wobei diese Länge ein ganzes Faktor-K-Vielfaches der Gesamtanzahl von Unterkanälen M ist.

4. Mehrträger-Übertragungssystem nach einem der Ansprüche 1 bis 3, bei dem eine dem Faktor K entsprechende Anzahl von Signalen, die von einer dem Faktor K entsprechenden Anzahl von benachbarten Ausgängen des iFFT-Blockes (110) gesendet werden, eine zeitliche Überlappung aufweisen, die M Datenmustern entsprechen, und bei dem die Überlappungs- und Summiervorrichtung (120) die Teile summiert, die von jedem dieser K Signale, die von K benachbarten Ausgängen des iFFT-Blocks (110) gesendet werden und die sich überlappen, um mindestens einen Teil des von diesem Sender (10) gesendeten Signals zu liefern.

5. Mehrträger-Übertragungssystem für Digitaldaten auf einer vorbestimmten Anzahl von Unterkanälen, mit mindestens einem Empfänger (20), der eine durch Frequenzverschiebung von einem Prototypfilter abgeleitete Analyse-Filterbank aufweist, wobei dieser Empfänger (20) einen Serien-Parallel-Wandler (220) aufweist, der Mustereinheiten des empfangenen Signals bildet, mit genauso vielen Mustern wie die vorbestimmte Anzahl von Unterkanälen des Systems und einem FFT-Block (210), der an seinen Ausgängen die Fouriertransformierte des an seinen Eingängen angewendeten Signals liefern kann,
in dem der FFT-Block (210) des Empfängers (20) eine Größe aufweist, d. h. eine genauso große Anzahl von Eingängen und Ausgängen, die unbedingt größer ist als die vorbestimmte Anzahl von Unterkanälen des Systems, und in dem der Empfänger (20) zudem eine Vorrichtung zur Frequenzentspreizung (200) aufweist, die das Signal jedes Ausgangs des FFT-Blocks (210) mit einem der vorbestimmten Frequenzkoeffizienten (Hₖ) des Prototypfilters der Analyse-Filterbank multipliziert und das Ergebnis dieser Multiplikationen addiert, um mindestens einen Teil des Ausgangssignals des Empfängers (20) zu liefern.

6. Übertragungssystem nach Anspruch 5, bei dem der Empfänger auch eine Synchronisationsvorrichtung umfasst, die dem FFT-Block (210) einen Rechentakt vorschreibt, der unbedingt schneller ist als der Takt, der der Inversen der Größe des FFT-Blocks (210) entspricht.

7. Mehrträger-Übertragungssystem nach einem der Ansprüche 5 und 6, bei dem die Größe des FFT-Blocks (210) des Empfängers (20) der Länge des Prototypfilters der Filterbank entspricht, wobei diese Länge ein ganzes Faktor-K-Vielfaches der Gesamtanzahl von Unterkanälen M ist, und bei dem zwei aufeinanderfolgende Eingangssignale des FFT-Blocks (210) eine zeitliche Überlappung einer empfangenen Anzahl von Signalmustern aufweisen, die der Größe des FFT-Blocks (210) entspricht, von der die Gesamtanzahl von Unterkanälen M abgezogen wird.

8. Mehrträger-Übertragungssystem nach einem der Ansprüche 5 bis 7, bei dem der Empfänger (20) einen zwischen dem FFT-Block (210) und der Vorrichtung zur Frequenzentspreizung (200) eingefügten Entzerrer (240) umfasst, der das Signal jedes Ausgangs des FFT-Blocks (210) mit einem vorbestimmten Koeffizienten des Entzerrers multipliziert.

9. Mehrträger-Übertragungsverfahren eines Signals, das das Mehrträger-Übertragungssystem nach einem der Ansprüche 1 bis 8 anwendet, nach dem man die Signale der Unterkanäle durch eine OQAM-Modulation moduliert.

10. Mehrträger-Übertragungssystem für Digitaldaten auf der Basis von Filterbanken mit einem Sender nach einem der Ansprüche 1 bis 4 und einem Empfänger nach einem der Ansprüche 5 bis 8.

11. Mehrträger-Übertragungsverfahren eines Signals, das ein Mehrträger-Übertragungssystem nach Anspruch 10 anwendet, nach dem man die Signale der Unterkanäle durch eine OQAM-Modulation moduliert.

## Claims

1. A multicarrier transmission system for transmitting a signal comprising digital data over a predetermined number of subchannels, the system comprising at least a transmitter (10) having a synthesis filter bank deduced from a prototype filter by frequency translation, the transmitter including a serial-to-parallel converter (130) that forms sets of samples of the signal for transmission, each set comprising a number of samples equal to the number of subchannels of said system, and an iFFT block (110) adapted to output the inverse Fourier transform of said signal applied to its inputs, wherein said transmitter also includes a frequency spreader device (100) that multiplies each data sample of each set of data samples from the serial-to-parallel converter (130) by predetermined frequency coefficients (Hₖ) of the prototype filter of the synthesis filter bank, and applies each signal resulting from the multiplication of a data sample by one of said frequency coefficients (Hₖ) to one of the inputs of the iFFT block (110), which block presents a size, i.e. a number of inputs equal to its number of outputs, that is strictly greater than said predetermined number of subchannels.

2. A transmission system according to claim 1, wherein the transmitter also includes an overlap/sum device (120) comprising a parallel-to-serial converter (121) that receives as inputs the signals from the outputs of the iFFT block (110) and that delivers as output an output signal corresponding to the time succession of successive output signals from the iFFT block (110), the overlap/sum device also adding a portion of the output signal from the serial-to-parallel converter (121) to a portion of one or more preceding output signals from the iFFT block, in order to deliver the signal that is transmitted by said transmitter (10).

3. A multicarrier transmission system according to claim 1 or claim 2, wherein said size of the iFFT block (110) of the transmitter (10) is equal to the length of the prototype filter of the synthesis filter bank, said length being a multiple by an integer factor K of the total number of subchannels M.

4. A multicarrier transmission system according to any one of claims 1 to 3, wherein a number of signals transmitted by the same number of adjacent outputs of the iFFT block (110) present time overlap corresponding to M data samples, where said number is equal to said factor K, and said overlap/sum device (120) sums the overlapping portions of each of these K signals transmitted by K adjacent outputs of the iFFT block (110) to deliver at least a portion of the signal transmitted by said transmitter (10).

5. A multicarrier transmission system for transmitting digital data over a predetermined number of subchannels, the system including at least one receiver (20) having an analysis filter bank deduced from a prototype filter by frequency translation, the receiver (20) having a serial-to-parallel converter (220) that forms sets of samples of the received signal, each set comprising a number of samples equal to said predetermined number of subchannels of the system, and an FFT block (210) adapted to deliver at its output the Fourier transform of the signal applied to its input, wherein said FFT block (210) of said receiver (20) presents a size, i.e. a number of inputs equal to the number of its outputs, that is strictly greater than said predetermined number of subchannels of the system, and wherein said receiver (20) further includes a frequency de-spreader device (200) that multiplies the signal from each output of the FFT block (210) by one of the predetermined frequency coefficients (Hₖ) of the prototype filter of the analysis filter bank, and sums the results of these multiplications in order to deliver at least a portion of the output signal from said receiver (20).

6. A transmission system according to claim 5, wherein said receiver also includes a synchronizer device imposing a calculation rate on the FFT block (210) that is strictly greater than the rate equal to the reciprocal of the size of said FFT block (210).

7. A multicarrier transmission system according to claim 5 or claim 6, wherein the size of the FFT block (210) of the receiver (20) is equal to the length of the prototype filter of the filter bank, said length being a multiple by an integer factor K of the total number of subchannels M, and wherein two consecutive input signals of the FFT block (210) present time overlap by a number of received signal samples equal to the size of the FFT block (210) from which the total number of the subchannels M has been subtracted.

8. A multicarrier transmission system according to any one of claims 5 to 7, wherein the receiver (20) includes an equalizer (240) inserted between the FFT block (210) and the frequency de-spreader device (200), which equalizer multiplies the signal from each output of the FFT block (210) by a predetermined equalizer coefficient.

9. A multicarrier transmission method for transmitting a signal using the multicarrier transmission system according to any one of claims 1 to 8, wherein the signals of the subchannels are modulated using OQAM.

10. A multicarrier transmission system for transmitting digital data, the system being based on filter banks, and comprising a transmitter according to any one of claims 1 to 4 and a receiver according to any one of claims 5 to 8.

11. A multicarrier transmission method for transmitting a signal using a multicarrier transmission system according to claim 10, wherein the signals of the subchannels are modulated by OQAM.
